# FASCICULE DE BREVET EUROPEEN

(11) **EP 3 419 944 B1**
(45) Date de publication et mention de la délivrance du brevet: **20.07.2022**
(21) Numéro de dépôt: 17710352.0
(22) Date de dépôt: 23.02.2017
(51) Int. Cl.: C03C 17/36

(54) **PROCEDE DE GRAVURE SELECTIVE D'UNE COUCHE OU D'UN EMPILEMENT DE COUCHES SUR SUBSTRAT VERRIER**
VERFAHREN ZUM SELEKTIVEN ÄTZEN EINER SCHICHT ODER EINES SCHICHTSTAPELS AUF EINEM GLASSUBSTRAT
METHOD FOR THE SELECTIVE ETCHING OF A LAYER OR A STACK OF LAYERS ON A GLASS SUBSTRATE

(30) Priorité: 26.02.2016 FR 1651629
(43) Date de publication de la demande: 02.01.2019
(73) Titulaire: SAINT-GOBAIN GLASS FRANCE, 92400 Courbevoie (FR)
(72) Inventeur: BRUDIEU, Barbara, 75013 Paris (FR); RACHET, Vincent, 45590 Saint-Cyr en Val (FR); GUILLEMOT, François, 75019 Paris (FR); NADAUD, Nicolas, 75013 Paris (FR)
(74) Mandataire: Saint-Gobain Recherche
(86) Numéro de dépôt international: PCT/FR2017/050405
(87) Numéro de publication internationale: WO 2017/144823

(56) Documents cités:
- US-A1- 2008 213 482

## Description

L'invention est relative à un vitrage sur lequel on a déposé par un procédé de dépôt physique en phase vapeur (PVD pour Physical Vapor Déposition) sous vide, principalement pulvérisation cathodique assistée par magnétron, dépôt chimique en phase vapeur assisté par plasma (PECVD pour Plasma Enhanced Chemical Vapor Déposition) ou évaporation ou un procédé de dépôt par voie liquide, de une ou plusieurs couches minces présentant une structuration spatiale à des échelles pouvant varier de plusieurs cm à moins de 10µm.

Les produits visés sont variés : couches à l'argent (contrôle solaire, basémissif, blindage électromagnétique, chauffant), couches modifiant le niveau de réflexion dans le visible (couches anti-reflet ou miroir), couches électrodes transparentes ou non, couches électrochromes, électroluminescentes, antiirisation, anti-salissure, anti-rayure, magnétiques, couches colorées ou absorbantes pour modifier la transmittance dans le visible à des fins esthétiques.

Les produits visés sont en particulier les empilements déposés par pulvérisation magnétron.

On pensera, mais pas de façon exclusive, à des vitrages présentant à la fois un caractère de réflexion des ondes IR proches et/ou lointains comme il est usuel dans les vitrages à contrôle thermique. La fonction apportée est dans ce cas, soit la diminution drastique de l'émissivité de la surface du vitrage (isolation thermique), soit une diminution importante de la quantité d'énergie solaire traversant l'ensemble du vitrage (contrôle solaire).

De même, on considérera les vitrages recouverts d'une couche conductrice assurant un rôle d'électrode - par exemple pour une fonction chauffante (eglass pour les applications bâtiment, pare-brise ou latérale chauffant(e) pour les applications automobile ou aéronautique) ou pouvant servir d'antenne pour capter des ondes électromagnétiques.

Un cas particulier concerne la bande micro-onde aux alentours du GHz (100µm<l<1m) qui trouve des applications pour les transmissions radio (GSM, Satellite, Radar...). En effet la possibilité de structurer la couche à une échelle inférieure à celle de la longueur d'onde donne accès à la gamme des métamatériaux où la transmission életromagnétique peut être modulée.

Pour ces différentes fonctions (antenne, chauffage, contrôle thermique), la couche fortement conductrice et sans mise à la masse, provoque une atténuation significative des ondes électromagnétiques hautes fréquences et il est difficile d'assurer le compromis entre contrôle thermique (ci-dessus le cas de la réduction d'échauffement dans un véhicule) et la bonne réception des signaux de communication. L'atténuation classique sur un pare-brise d'une couche de contrôle thermique peut être par exemple de -30 à -45dB environ entre 1 et 5 GHz.

Cette compatibilité des fonctions thermiques avec la transparence aux ondes de communication (par exemple 2G/3G/4G) est demandée fortement pour les applications automobiles et de plus en plus pour les bâtiments ne disposant pas de relais.

Il existe actuellement deux solutions pour pallier à cette difficulté : la fonction de contrôle thermique peut être apportée non pas par une couche mince conductrice mais pas un intercalaire polyvinylbutyral (PVB) ou autre contenant des nanoparticules d'un composé conducteur comme l'oxyde d'indium dopé à l'étain (ITO pour indium tin oxide) par exemple. Dans ce cas, le contrôle thermique est assuré par absorption et non plus réflexion de la partie énergétique du spectre. Cette solution n'est possible que pour le contrôle solaire, et peu efficace par rapport à la solution en réflexion et nécessite un vitrage feuilleté.

La deuxième solution consiste à graver la couche à l'argent après dépôt de façon à éliminer sélectivement l'argent sur des bandes suffisamment fines (100 µm) pour être difficilement perceptibles par l'œil et éloignées les unes des autres de quelques mm selon les longueurs d'onde dont on souhaite favoriser la transmission. Des motifs complexes peuvent être utilisés pour cette application en pleine face. Des représentants de cette technique sont notamment les documents WO9954961 A1 et WO2014033007 A1.

En sus, l'efficacité de chauffage d'une couche conductrice dépend de sa résistance par carré R², de la tension entre les électrodes mais aussi de la distance entre les électrodes. Pour les applications bâtiment, cette dépendance pose un problème car, à même source électrique, il faut une résistance électrique du vitrage pour chaque taille de zone chauffante. Une solution peut consister à graver une fois de plus par exemple une couche base Ag de façon à moduler sa résistance par carré globale pour lui permettre d'être compatible avec la distance entre électrodes et la puissance de chauffe surfacique recherchée.

Enfin, un vitrage à base d'argent peut être fonctionnalisé sous forme d'une antenne à condition d'assurer le découplage électromagnétique de la couche avec le cadre de la voiture par exemple. Cette opération est également assurée par une gravure.

Les méthodes de gravure sélectives alternatives sont essentiellement issues de l'industrie micro-électronique. Certaines emploient des couches temporaires, d'autres consistent en de la gravure directe.

Dans l'industrie micro-électronique, la photolithographie : met en œuvre des couches temporaires pour servir de masque à des attaques acides sélectives. La photo lithographie permet des gravures très fines (45-90 nm aujourd'hui industriellement) mais reste limitée à la taille des masques aujourd'hui limitée par la taille des optiques.

La gravure laser de la couche conductrice est assurée par un laser de gravure ponctuelle qui va sublimer l'empilement de couche mince par balayage du faisceau. Cette opération présente une productivité faible sur des vitrages de grande dimension et demande un investissement important au regard des surfaces traitées.

La gravure par impact d'ions ou d'électrons présente les mêmes limitations que la gravure laser en termes de productivité.

D'autres méthodes de gravure viennent de l'impression traditionnelle.

A ce jour, les techniques d'impression par jet d'encre restent encore limitées pour les tailles supérieures à 10m² à des temps d'impression supérieure à la minute.

A l'impression par sérigraphie (screen printing) peuvent être préférées d'autres techniques lorsqu'une échelle de résolution plus petite que 50 µm est recherchée : ce procédé procure en effet des qualités de bord relativement médiocres à ces petites échelles.

L'invention a donc pour but la mise à disposition de vitrages fonctionnels laissant passer les radiofréquernces. On entend ici par vitrage fonctionnel un vitrage antenne, chauffant, à contrôle thermique, ou similaire, un vitrage à couche(s) électroconductrices ou non, ainsi que tous les autres vitrages mentionnés précédemment. Les radiofréquences sont des ondes électromagnétiques hautes fréquences, aux alentours du GHz, et trouvent des applications dans les transmissions radio (GSM, satellite, radar...), la communication (par exemple 2G/3G/4G).

A cet effet, l'invention a pour objet un procédé de dépôt sur un substrat verrier d'une couche ou d'un empilement de couches essentiellement minérale(s) fonctionnelle(s), caractérisé en ce qu'il comprend les étapes consistant à
- déposer sur le substrat un revêtement essentiellement organique sur une partie mais non la totalité de sa surface, conformément à un motif, à
- déposer sur le substrat ainsi revêtu une couche ou un empilement de couches essentiellement minérale(s) fonctionnelle(s), à
- soumettre l'ensemble à un traitement thermique de manière à effectuer la combustion du revêtement essentiellement organique, puis à
- éliminer celui-ci et la couche ou l'empilement de couches essentiellement minérale(s) fonctionnelle(s) qui le recouvre par essuyage tel qu'au chiffon et/ou souffle gazeux et/ou lavage, de manière à obtenir la couche ou l'empilement de couches essentiellement minérale(s) fonctionnelle(s) selon un motif correspondant au négatif de celui réalisé avec le revêtement essentiellement organique.

Le produit de la combustion du revêtement organique est une poudre qui n'adhère pas au substrat, de sorte qu'elle peut alors être éliminée avec la ou les couches minérale(s) qui la recouvre(nt) sans exercer une action mécanique du type brossage, frottement ou abrasion quelconque susceptible de détériorer le substrat et surtout la qualité des bords de zones non imprimées par le revêtement organique et recouvertes de la ou des couches minérale(s) (netteté, résolution).

Le procédé permet de réaliser sur ligne de production industrielle, sur un substrat de grande surface, un motif de revêtement essentiellement organique d'une surface de dimensions allant de 1 m à 10 µm. Le temps de cycle réduit permet de valider le caractère applicable industriellement.

De préférence, le dépôt conformément à un motif du revêtement essentiellement organique est effectué par un procédé par voie liquide, de rouleau gravé direct ou indirect tel qu'offset, flexographie, d'impression par jet d'encre, de masquage, lithographie ou sérigraphie. On peut utiliser un rouleau de largeur au moins 3210mm (Pleine Largeur Float - PLF) dont la gravure reproduira le motif recherché. Il s'agit dans ce cas précis d'un motif répétitif mais cela reste compatible par exemple avec l'amélioration de transmission électromagnétique.

De préférence, le revêtement essentiellement organique est choisi parmi un monomère et/ou oligomère acrylate, époxyacrylate, polyester acrylate, polyuréthane acrylate, composition polyvinylpyrrolidone + EDTA, polyamide, polyvinylbutyral, résine photosensible positive de type diazonaphtoquinone-novolaque, tout matériau organique réticulé sous rayonnement ultraviolet ou infrarouge, seul(e) ou en mélange de plusieurs d'entre eux (elles).

De préférence, le revêtement essentiellement organique a une épaisseur au plus égale à 30, et par ordre de préférence croissant, au plus égale à 20 et 10 µm, et de manière particulièrement préférée d'approximativement 5 µm. Des épaisseurs de 1 µm voire quelques centaines de nm ne sont cependant pas exclues de l'invention. En dehors des zones imprimées de ce revêtement organique correspondant aux motifs allant de 1m à 10.µm de dimensions de surface, il est nécessaire d'avoir moins de 100nm (voire pas du tout) d'épaisseur de revêtement organique temporaire pour ne pas dégrader l'empilement minéral fonctionnel dans ces zones censées avoir un empilement minéral intact après trempe.

De préférence, préalablement au dépôt de la couche ou de l'empilement de couches essentiellement minérale(s) fonctionnelle(s), l'élaboration du revêtement essentiellement organique comprend une réticulation par traitement thermique et/ou sous rayonnement tel qu'ultraviolet (UV) et/ou un séchage, puis l'ensemble est lavé. Le revêtement essentiellement organique pourra être avantageusement réticulé sous UV pour limiter l'espace nécessaire pour le séchage. On s'assurera néanmoins que le fluage du revêtement essentiellement organique (vernis, résine...) avant réticulation est limité afin d'éviter la perte de précision du motif.

Le vernis ou résine sera séché convenablement avant de passer sous une machine à laver conventionnelle de coater puis l'opération de dépôt de la ou des couches (minces) essentiellement minérale(s) fonctionnelle(s) par exemple conductrice(s) est effectué. On pourrait aussi envisager de laver le verre avant le dépôt partiel (impression) du revêtement organique, puis effectuer cette impression éventuellement suivie d'une réticulation, puis entrer directement dans le coater (sans lavage préalable).

De préférence, la couche ou l'empilement de couches essentiellement minérale(s) fonctionnelle(s) est formé(e) par un procédé de dépôt physique en phase vapeur (PVD pour Physical Vapor Déposition) sous vide tel que pulvérisation cathodique notamment assistée par magnétron, évaporation ou dépôt chimique en phase vapeur assisté par plasma (PECVD pour Plasma Enhanced Chemical Vapor Déposition) ou par voie liquide.

De préférence, la couche ou l'empilement de couches essentiellement minérale(s) fonctionnelle(s) est constitué(e) d'Ag, oxyde conducteur transparent (TCO) tel qu'oxyde d'indium dopé à l'étain (ITO), oxyde d'indium dopé au zinc (IZO), ZnO :Al, Ga, stannate de cadmium, Al, Nb, Cu, Au, composé de Si et N tel que Si₃N₄, empilement diélectrique afférent, seul ou en combinaison de plusieurs d'entre eux.

Le verre ne pouvant plus être coupé une fois trempé, il peut être, dans certaines applications, par exemple bâtiment, stocké puis découpé, démargé etc... avant trempe. Ce vitrage pourra être vendu comme tel, principalement dans ce cas avec une couche éliminée ensuite à la trempe chez un transformateur.

De préférence, le traitement thermique fait partie d'une trempe thermique du substrat verrier. Lors de la trempe, le vernis ou la résine disparait par combustion et élimine de fait la couche ou l'empilement de couches essentiellement minérale(s) fonctionnelle(s), éventuellement conductrice aux endroits des motifs, ce qui provoque la gravure sélective recherchée.

Dans une réalisation particulière, le traitement thermique fait partie d'un bombage du substrat verrier, notamment d'un bombage par pressage. Dans ce cas, un traitement thermique préliminaire provoque la disparition du vernis ou de la résine. Si des outils de pressage sont mis en œuvre pour bomber, on s'assurera que la combustion du revêtement essentiellement organique ait lieu avant cette phase de pressage.

Selon une variante du procédé, après le dépôt de la couche ou l'empilement de couches essentiellement minérale(s) fonctionnelle(s), on dépose à nouveau au moins une séquence revêtement essentiellement organique - couche ou empilement de couches essentiellement minérale(s) fonctionnelle(s). Ce dépôt est de préférence effectué avant le traitement thermique pour la combustion du revêtement essentiellement organique le plus proche du substrat, et un traitement thermique ultérieur produira la combustion de plusieurs revêtements essentiellement organiques superposés ainsi que l'élimination subséquente de plusieurs couches ou empilements de couches essentiellement minérales fonctionnelles les recouvrant. Cependant le dépôt de séquences revêtement essentiellement organique - couche ou empilement de couches essentiellement minérale(s) fonctionnelle(s), à partir de la deuxième séquence, après le traitement thermique de combustion du premier revêtement essentiellement organique et essuyage ou élimination par souffle gazeux de ses résidus organiques et des résidus minéraux les recouvrant, fait également partie de l'invention.

Le substrat verrier obtenu par le procédé de l'invention est également susceptible d'être intégré dans un vitrage feuilleté ou autre produit composite feuilleté, et/ou dans un vitrage multiple.

D'autres objets de l'invention consistent en
- l'application d'un vitrage obtenu par un procédé tel que décrit précédemment comme vitrage fonctionnel laissant passer les radiofréquences ; il peut s'agir d'un vitrage de contrôle thermique ou chauffant et transparent (applications automobile, transport et bâtiment), d'un vitrage chauffant à résistance par carré adaptée (automobile, transport et bâtiment), d'un vitrage conducteur déjà structuré en antenne (automobile et transport), d'un vitrage de contrôle solaire de sélectivité constante au moins égale à 1,6 et de très haute transmission lumineuse TL, d'un vitrage à masquage à bas coût (alternative au démargeage à la meule), d'un vitrage de type Day Lighting avec TL modulée suivant la hauteur, d'un vitrage à indice négatif dans le domaine des micro-ondes (GHz) pour application antiradar, GSM...., d'un vitrage de grande taille comme substrat avec des électrodes structurées.

L'invention sera mieux comprise à la lumière des exemples suivants.

### Exemple 1

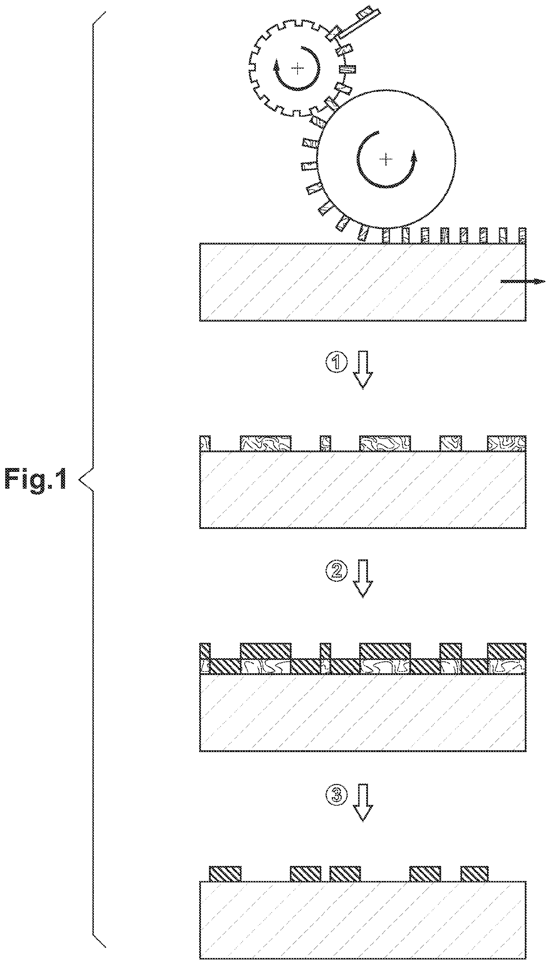

En référence à la Figure 1, le procédé de l'invention peut être représenté en quatre vues correspondant à trois étapes principales successives, de gauche à droite sur la Figure.

On utilise un vernis d'acrylate réticulable sous UV, ayant la formulation suivante, où les proportions sont en masse : 57% d'oligomère hexaacrylate urethane aliphatique (CN9276 fabriqué par Sartomer), 38% de monomères et plus exactement 19% de tricyclodecanedimethanol diacrylate (TCDDMDA ou SR833S de Sartomer) ainsi que 19% de trimethylolpropane triacrylate (TMPTA ou SR351 de Sartomer) et enfin 5% de photoinitiateur de type cétone soit plus précisément un mélange de benzophénone et de méthanone (Speedcure 500 ou Irgacure 500 de BASF). Ce vernis est préparé en mélangeant mécaniquement tous ces composés (résines et photoinitiateur) à l'aide d'une pale. Après plusieurs heures d'agitation, le vernis peut être stocké plusieurs mois s'il est à l'abri de la lumière et des fortes variations de température.

Pour réaliser le dépôt, une certaine quantité de ce vernis est appliquée sur le verre propre et avivé selon la méthode de gravure indirecte au rouleau comme le présente l'étape 1 de la figure 1. Après passage au rouleau, le substrat+vernis déposé est exposé aux UV (lampe de type mercure). L'épaisseur du revêtement à motif de vernis est de 5 µm.

Après une étape intermédiaire de lavage, un empilement de couches minces est déposé de manière conforme par pulvérisation cathodique lors de l'étape 2 sur le système verre+vernis acrylate. Cet empilement de couches minces a la constitution suivante, dans laquelle les épaisseurs sont en nm : SnO₂ 17 / ZnO 17 / Ag 9 / Ti 1 / ZnO 11 / Si₃N₄ 55/ ZnO 20 / Ag 9 / Ti 1 / ZnO 10 / Si₃N₄ 25. Les couches de ZnO sont non poreuses. Cet empilement à fonction de contrôle thermique est trempable.

Lors d'une étape de trempe (3 sur la figure 1.), généralement dans un four à convection à 730°C pendant 35 secondes par mm de verre (140 secondes pour un verre épais de 4mm), la couche organique est dégradée ce qui entraîne le décollement des couches magnétrons dans les zones où elle est présente. Le système final consiste en l'empilement de couches minces décrit ci-dessus, structuré selon un motif correspondant au négatif de celui réalisé avec la résine.

D'excellents résultats ont aussi été obtenus en appliquant le vernis par impression par jet d'encre.

### Exemple 2

Cet exemple diffère du précédent par le revêtement essentiellement organique. Il s'agit ici d'un dépôt par jet d'encre d'une encre commercialisée par la Société Marabu dans la gamme Ultra-Jet DUV A, notamment en couleur cyan ou magenta. On obtient une épaisseur de quelques centaines de nm à quelques µm. L'encre (motifs) est réticulée sous ultraviolet.

## Revendications

1. Procédé de dépôt sur un substrat verrier d'une couche ou d'un empilement de couches essentiellement minérale(s) fonctionnelle(s), **caractérisé en ce qu'**il comprend les étapes consistant à
- déposer sur le substrat un revêtement essentiellement organique sur une partie mais non la totalité de sa surface, conformément à un motif, à
- déposer sur le substrat ainsi revêtu une couche ou un empilement de couches essentiellement minérale(s) fonctionnelle(s), à
- soumettre l'ensemble à un traitement thermique de manière à effectuer la combustion du revêtement essentiellement organique, puis à
- éliminer celui-ci et la couche ou l'empilement de couches essentiellement minérale(s) fonctionnelle(s) qui le recouvre par essuyage tel qu'au chiffon et/ou souffle gazeux et/ou lavage, de manière à obtenir la couche ou l'empilement de couches essentiellement minérale(s) fonctionnelle(s) selon un motif correspondant au négatif de celui réalisé avec le revêtement essentiellement organique.

2. Procédé selon la revendication 1, **caractérisé en ce que** le dépôt conformément à un motif du revêtement essentiellement organique est effectué par un procédé par voie liquide, de rouleau gravé direct ou indirect tel qu'offset, flexographie, d'impression par jet d'encre, de masquage, lithographie ou sérigraphie.

3. Procédé selon la revendication 2, **caractérisé en ce que** le revêtement essentiellement organique est choisi parmi un monomère et/ou oligomère acrylate, époxyacrylate, polyester acrylate, polyuréthane acrylate, composition polyvinylpyrrolidone + EDTA, polyamide, polyvinylbutyral, résine photosensible positive de type diazonaphtoquinone-novolaque, tout matériau organique réticulé sous rayonnement ultraviolet ou infrarouge, seul(e) ou en mélange de plusieurs d'entre eux (elles).

4. Procédé selon l'une des revendications précédentes, **caractérisé en ce que** le revêtement essentiellement organique a une épaisseur au plus égale à 30, et par ordre de préférence croissant, au plus égale à 20 et à 10 µm, et de manière particulièrement préférée d'approximativement 5 µm.

5. Procédé selon l'une des revendications précédentes, **caractérisé en ce que** préalablement au dépôt de la couche ou de l'empilement de couches essentiellement minérale(s) fonctionnelle(s), l'élaboration du revêtement essentiellement organique comprend une réticulation par traitement thermique et/ou sous rayonnement tel qu'ultraviolet et/ou un séchage, puis l'ensemble est lavé.

6. Procédé selon l'une des revendications précédentes, **caractérisé en ce que** la couche ou l'empilement de couches essentiellement minérale(s) fonctionnelle(s) est formé(e) par un procédé de dépôt physique en phase vapeur (PVD pour Physical Vapor Déposition) sous vide tel que pulvérisation cathodique notamment assistée par magnétron, évaporation ou dépôt chimique en phase vapeur assisté par plasma (PECVD pour Plasma Enhanced Chemical Vapor Déposition) ou par voie liquide.

7. Procédé selon la revendication 6, **caractérisé en ce que** la couche ou l'empilement de couches essentiellement minérale(s) fonctionnelle(s) est constitué(e) d'Ag, oxyde conducteur transparent (TCO) tel qu'oxyde d'indium dopé à l'étain (ITO), oxyde d'indium dopé au zinc (IZO), ZnO :Al, Ga, stannate de cadmium, Al, Nb, Cu, Au, composé de Si et N tel que Si₃N₄, empilement diélectrique afférent, seul ou en combinaison de plusieurs d'entre eux.

8. Procédé selon l'une des revendications précédentes, **caractérisé en ce que** le traitement thermique fait partie d'une trempe thermique du substrat verrier.

9. Procédé selon l'une des revendications précédentes, **caractérisé en ce que** le traitement thermique fait partie d'un bombage du substrat verrier.

10. Procédé selon la revendication 9, **caractérisé en ce que** le bombage est effectué par pressage.

11. Procédé selon l'une des revendications précédentes, **caractérisé en ce qu'**après le dépôt de la couche ou l'empilement de couches essentiellement minérale(s) fonctionnelle(s), on dépose à nouveau au moins une séquence revêtement essentiellement organique - couche ou empilement de couches essentiellement minérale(s) fonctionnelle(s).

12. Application d'un vitrage obtenu par un procédé selon l'une des revendications 1 à 11 comme vitrage fonctionnel laissant passer les radiofréquences.

## Patentansprüche

1. Verfahren zur Abscheidung einer Schicht oder einer Stapelung von im Wesentlichen mineralischen Funktionsschicht(en) auf ein Glassubstrat, **dadurch gekennzeichnet, dass** es die Schritte umfasst, bestehend aus
- Abscheiden einer im Wesentlichen organischen Beschichtung auf dem Substrat auf einem Teil, aber nicht der Gesamtheit seiner Oberfläche, in Übereinstimmung mit einem Muster,
- Abscheiden einer Schicht oder einer Stapelung von im Wesentlichen mineralischen Funktionsschicht(en) auf dem somit beschichteten Substrat,
- Unterziehen der Anordnung einer Wärmebehandlung, um die Verbrennung der im Wesentlichen organischen Beschichtung zu bewirken, und dann
- Entfernen dieser und der Schicht oder der Stapelung von im Wesentlichen mineralischen Funktionsschicht(en), die sie bedecken, durch Abwischen wie mit einem Tuch und/oder Gasblasen und/oder einer Waschung, um die Schicht oder die Stapelung von im Wesentlichen mineralischen Funktionsschicht(en) in einem Muster zu erhalten, das dem Negativ desjenigen mit der im Wesentlichen organischen Beschichtung hergestellten entspricht.

2. Verfahren nach Anspruch 1, **dadurch gekennzeichnet, dass** die Abscheidung in Übereinstimmung mit einem Muster der im Wesentlichen organischen Beschichtung durch ein Flüssigverfahren, direkt oder indirekt mit gravierter Walze wie Offset, Flexodruck, Tintenstrahldruck, Maskierung, Lithografie oder Siebdruck erfolgt.

3. Verfahren nach Anspruch 2, **dadurch gekennzeichnet, dass** die im Wesentlichen organische Beschichtung ausgewählt ist aus einem Acrylatmonomer und/oder -oligomer, Epoxyacrylat, Polyesteracrylat, Polyurethanacrylat, einer Zusammensetzung aus Polyvinylpyrrolidon + EDTA, Polyamid, Polyvinylbutyral, einem positiven lichtempfindlichen Harz vom Diazonaphthochinon-Novolak-Typ, jedem unter Ultraviolett- oder Infrarotstrahlung vernetzten organischen Material, allein oder in Mischung von mehreren von ihnen.

4. Verfahren nach einem der vorstehenden Ansprüche, **dadurch gekennzeichnet, dass** die im Wesentlichen organische Beschichtung eine Dicke von höchstens gleich 30 und in vorzugsweise aufsteigender Reihenfolge von höchstens gleich 20 und 10 µm und besonders bevorzugt von etwa 5 µm aufweist.

5. Verfahren nach einem der vorstehenden Ansprüche, **dadurch gekennzeichnet, dass** vor der Abscheidung der Schicht oder der Stapelung von im Wesentlichen mineralischen Funktionsschicht(en) die Herstellung der im Wesentlichen organischen Beschichtung eine Vernetzung durch Wärmebehandlung und/oder unter Strahlung wie Ultraviolettstrahlung und/oder Trocknung umfasst, wobei die Anordnung danach gewaschen wird.

6. Verfahren nach einem der vorstehenden Ansprüche, **dadurch gekennzeichnet, dass** die Schicht oder die Stapelung von im Wesentlichen mineralischen Funktionsschicht(en) durch ein Verfahren der physikalischen Dampfabscheidung (PVD für Physical Vapor Deposition) im Vakuum wie insbesondere durch Magnetron unterstützte Kathodenzerstäubung, Verdampfung oder durch Plasma unterstützte chemische Dampfabscheidung (PECVD für Plasma Enhanced Chemical Vapor Deposition) oder auf flüssigem Wege gebildet wird.

7. Verfahren nach Anspruch 6, **dadurch gekennzeichnet, dass** die Schicht oder die Stapelung von im Wesentlichen mineralischen Funktionsschicht(en) aus Ag, transparentem leitfähigem Oxid (TCO) wie zinndotiertem Indiumoxid (ITO), zinkdotiertem Indiumoxid (IZO), ZnO:Al, Ga, Cadmiumstannat, Al, Nb, Cu, Au, Verbindung aus Si und N wie Si₃N₄, dazugehöriger dielektrischer Stapelung, einzeln oder in Kombination von mehreren von ihnen, ausgebildet ist.

8. Verfahren nach einem der vorstehenden Ansprüche, **dadurch gekennzeichnet, dass** die Wärmebehandlung Teil eines thermischen Härtens des Glassubstrats ist.

9. Verfahren nach einem der vorstehenden Ansprüche, **dadurch gekennzeichnet, dass** die Wärmebehandlung Teil eines Biegens des Glassubstrats ist.

10. Verfahren nach Anspruch 9, **dadurch gekennzeichnet, dass** das Biegen durch Pressen erfolgt.

11. Verfahren nach einem der vorstehenden Ansprüche, **dadurch gekennzeichnet, dass** nach der Abscheidung der Schicht oder der Stapelung von im Wesentlichen mineralischen Funktionsschicht(en) erneut mindestens eine Abfolge von im Wesentlichen organischer Beschichtung - Schicht oder Stapelung von im Wesentlichen mineralischen Funktionsschicht(en) - abgeschieden wird.

12. Anwendung einer Verglasung, die durch ein Verfahren nach einem der Ansprüche 1 bis 11 hergestellt wurde, als Funktionsverglasung, die Funkfrequenzen durchlässt.

## Claims

1. A process for depositing on a glazing substrate an essentially mineral functional layer or a stack of essentially mineral functional layers, **characterized in that** it comprises steps consisting in
- depositing, in a pattern, on some but not all of the surface of the substrate, an essentially organic coating, in
- depositing on the substrate thus coated an essentially mineral functional layer or a stack of essentially mineral functional layers, in
- subjecting the result to a heat treatment so as to make the essentially organic coating combust, then in
- removing the latter and the essentially mineral functional layer or the stack of essentially mineral functional layers that covers it by wiping such as with a cloth and/or under a flow of gas and/or by washing, so as to obtain an essentially mineral functional layer or a stack of essentially mineral functional layers having a pattern corresponding to the negative of that produced with the essentially organic coating.

2. The process as claimed in claim 1, **characterized in that** the essentially organic coating is deposited in a pattern by a direct wet, engraved-roller process or an indirect wet process such as offset printing, flexographic printing, inkjet printing, masking, lithography or screen printing.

3. The process as claimed in claim 2, **characterized in that** the essentially organic coating is made from one or a blend of a plurality of the following: an acrylate monomer and/or oligomer, an epoxy acrylate monomer and/or oligomer, a polyester acrylate monomer and/or oligomer, a polyurethane acrylate monomer and/or oligomer, a polyvinylpyrrolidone + EDTA composition, polyamide, polyvinyl butyral, a diazonaphthoquinone-novolac positive photoresist and any organic material cured under infrared or ultraviolet radiation.

4. The process as claimed in one of the preceding claims, **characterized in that** the essentially organic coating has a thickness at most equal to 30, and in order of increasing preference, at most equal to 20 and to 10 µm, and particularly preferably of approximately 5 µm.

5. The process as claimed in one of the preceding claims, **characterized in that** prior to the deposition of the essentially mineral functional layer or the stack of essentially mineral functional layers, the production of the essentially organic coating comprises curing the coating by heat treatment and/or under radiation such as ultraviolet radiation and/or drying, then the result is washed.

6. The process as claimed in one of the preceding claims, **characterized in that** the essentially mineral functional layer or the stack of essentially mineral functional layers is formed by a vacuum physical vapor deposition process (PVD) such as cathode sputtering and in particular magnetron cathode sputtering, evaporation or plasma-enhanced chemical vapor deposition (PECVD), or by a wet process.

7. The process as claimed in claim 6, **characterized in that** the essentially mineral functional layer or the stack of essentially mineral functional layers consists of one of or a combination of a plurality of the following: Ag, a transparent conductive oxide (TCO) such as tin-doped indium oxide (ITO) zinc-doped indium oxide (IZO), ZnO:AI, Ga, cadmium stannate, Al, Nb, Cu, Au, a compound of Si and N such as Si₃N₄, a pertinent dielectric stack.

8. The process as claimed in one of the preceding claims, **characterized in that** the heat treatment forms part of a thermal temper of the glazing substrate.

9. The process as claimed in one of the preceding claims, **characterized in that** the heat treatment forms part of an operation for bending the glazing substrate.

10. The process as claimed in claim 9, **characterized in that** the glazing substrate is bent by pressing.

11. The process as claimed in one of the preceding claims, **characterized in that** after the essentially mineral functional layer or the stack of essentially mineral functional layers has been deposited, at least one additional sequence of an essentially organic coating and an essentially mineral functional layer or stack of essentially mineral functional layers is deposited.

12. The use of a glazing obtained by a process as claimed in one of claims 1 to 11 as a functional glazing that lets radiofrequencies pass.
